# EUROPÄISCHE PATENTANMELDUNG

(11) **EP 2 835 196 A1**
(43) Veröffentlichungstag der Anmeldung: **11.02.2015**
(21) Anmeldenummer: 13179405.9
(22) Anmeldetag: 06.08.2013
(51) Int. Cl.: B23B 31/16

(54) **Spannfutter**

(71) Anmelder: SMW-AUTOBLOK Spannsysteme GmbH, 88074 Meckenbeuren (DE)
(72) Erfinder: Marquart, Jürgen, 88677 Markdorf (DE)
(74) Vertreter: Engelhardt & Engelhardt

(57) **Zusammenfassung**

Bei einem Spannfutter (1), mit einem Futterkörper (1'), an dessen einer Stirnseite (2) mindestens zwei radial verlaufende Führungsnuten (6) eingearbeitet sind, mit jeweils einer in die Führungsnut (6) eingesetzten Spannbacke (7), mit jeweils einer der Spannbacke (7) zugeordneten und trieblich mit dieser über eine Schrägverzahnung (9, 10) verbundene Keilstange (8), die in dem Futterkörper (1') verschiebbar gelagert ist oder durch eine Keilhakenkupplung, und mit einem Betätigungskolben (15), der zentrisch in dem Futterkörper (1') angeordnet ist und der trieblich mit den Keilstangen (8) oder der Keilhakenkupplung in Wirkverbindung steht, soll bei jeder Zustellbewegung der Spannbacken (7) automatisch und selbsttätig eine Schmierung der Spannbacke (7) und der Führungsnut (6) erfolgen.

Dies ist dadurch erreicht, dass in einem in dem Futterkörper (1') vorgesehenen Raum (22) eine Hochdruckpumpe (21) angeordnet ist, dass in dem Raum (22) ein Schmiermittel (39) eingefüllt ist, dass aus dem Raum (22) der Hochdruckpumpe (21) eine Schmiermittelleitung (36) in den Futterkörper (1') vorhanden ist, die in eine Abzweigung (37) mündet, von der mindestens eine Schmierleitung (38) abzweigt bzw. abzweigen, die jeweils an einer unterschiedlichen Position in die Führungsnuten (6) mündet bzw. münden und dass die Hochdruckpumpe (21) durch die Zustellbewe gung der jeweiligen Keilstange (8) oder der Keilhakenkupplung aktiviert ist.

## Beschreibung

Die Erfindung bezieht sich auf ein Spannfutter, das beispielsweise an einer Werkzeugmaschine zur Abstützung von Wellen, Hohlzylindern oder dergleichen vorgesehen ist, nach dem Oberbegriff des Patentanspruches 1.

Ein derartiges Spannfutter ist aus der DE 195 02 363 C1 zu entnehmen. Dabei ist in eine Stirnseite des Futterkörpers eine in Längsrichtung des Futterkörpers verlaufende Bohrung vorgesehen, in die ein Betätigungskolben axial verschiebbar eingesetzt ist. Der Betätigungskolben treibt über Zwischenglieder drei Keilstangen an, die in dem Futterkörper eingearbeitete Aufnahmetaschen in diesen axial verschieblich gelagert sind. Die Keilstangen weisen eine Schrägverzahnung auf, die trieblich mit jeweils einer Spannbacke zusammenwirken, In die freie Stirnseite des Futterkörpers sind zudem drei radial verlaufende Führungsnuten eingearbeitet, in die einer der Spannbacken einsetzbar ist. Sobald die Spannbacke mit ihrer Schrägverzahnung in formschlüssiger Wirkverbindung mit der jeweiligen Keilstange steht, kann die Keilstange über den Betätigungskolben bewegt werden und über die Schrägverzahnung zwischen der Keilstange und der Unterseite der Spannbacke wird die jeweilige Spannbacke radial in Richtung eines einzuspannenden Werkstückes zugestellt.

Solche Spannfutter haben sich in der Praxis bewährt und werden in einer Vielzahl von Werkzeugmaschinen verwendet. Bei der Bearbeitung von eingespannten Werkstücken entstehen Verschmutzungen, beispielsweise durch eingesetzte Kühlflüssigkeiten oder durch die von dem Werkstück abgetrennten Späne. Diese Verschmutzungen in Form von Flüssigkeitspartikeln, metallischen Spänen und dergleichen, setzen sich jedoch in den in Richtung des Werkstückes weisenden Führungsnuten ab, wodurch eine erhöhte Reibung zwischen der Spannbacke und der Führungsnut bzw. der Keilstange bei deren Zustellung entsteht. Dadurch verringert sich jedoch die Spannkraft, so dass eine zuverlässige Halterung des zu bearbeitenden Werkstückes nicht mehr gewährleistet ist. Die Führungsnuten können zwar von den Verunreinigungen manuell gesäubert werden, diese Arbeiten sind jedoch zeit- und damit kostenintensiv.

Dieses Problem wurde erkannt und durch die EP 1 759 793 B1 ist ein Spannfutter beschrieben, in dem für jede der drei Führungsnuten eine Schmiermittelversorgung vorgesehen ist. Die triebliche Wirkverbindung zwischen der Spannbacke und einem Spann- oder Betätigungskolben ist bei diesem Stand der Technik mit Hilfe einer Keilhakenkopplung bewerkstelligt.

Nachteiligerweise ist bei dem Betrieb dieses bekannt gewordenen Spannfutters ein Austritt des Schmiermittels aus den Führungsnuten durch die vorhandenen Fliehkräfte in Richtung von Taschen, in denen Ausgleichsgewichte angeordnet sind, vorhanden. Durch die in den Taschen eingebauten Pumpen soll das darin gesammelte Schmiermitte in Richtung der Führungsnuten gepumpt werden. Eine permanente gesonderte Schmierung der Führungsnut bei der Zustellung der Spannbacken ist bei diesem Stand der Technik nicht vorgesehen.

Es ist daher Aufgabe der Erfindung, ein Spannfutter der eingangs genannten Gattung derart weiterzubilden, dass bei jeder Zustellbewegung der Spannbacken automatisch und selbstständig eine Schmierung der Spannbacke und der Führungsnut vorgesehen ist, durch die auch die Führungsnut und die Spannbacke von Verunreinigungen gesäubert sind und durch die die Reibung zwischen der Spannbacke und der Führungsnut auf ein Minimum begrenzt ist.

Diese Aufgabe ist erfindungsgemäß durch die Merkmale des kennzeichnenden Teils von Patentanspruch 1 gelöst.

Weitere vorteilhaft Weiterbildungen der Erfindung ergeben sich aus den Unteransprüchen.

Dadurch, dass durch die Zustellbewegung der Keilstange oder der Keilhakenkupplung eine Hochdruckpumpe aktiviert ist, in die eine bestimmte Menge eines Schmiermittels eingefüllt ist, und dadurch, dass der Raum, in dem die Hochdruckpumpe angeordnet ist, mit Schmiermittel gefüllt ist, das durch die Hochdruckpumpe über eine Schmierleitung zu einer Abzweigung und von dieser an unterschiedliche Positionen innerhalb der Führungsnut gelangt, wird bei jeder Zustellbewegung der Spannbacke die Führungsnut mit Schmiermittel befüllt. Dabei fördert die Hochdruckpumpe eine exakt vorgegebene Menge des Schmiermittels, so dass durch die Bewegung der Spannbacke entlang der Führungsnut das Schmiermittel gleichmäßig verteilt ist und gleichmäßig zwischen der Spannbacke und der Führungsnut verläuft, so dass dadurch die Reibung zwischen der Spannbacke und der Führungsnut verringert ist, und weiterhin die Verunreinigungen in Form von Kühlflüssigkeiten oder metallischen Spänen beseitigt sind.

Es ist besonders zweckmäßig, wenn in den Futterkörper zusätzlich ein Reservoir eingearbeitet ist, das über eine Förderleitung mit dem Raum der Hochdruckpumpe verbunden ist und wenn in dem Reservoir eine Förderpumpe eingesetzt ist, durch die ein bestimmter vorgegebener Förderdruck auf das in das Reservoir eingefüllte Schmiermittel ausgeübt ist, durch den das Schmiermittel auch in dem Raum der Hochdruckpumpe unter einem vorgegebenen Förderdruck steht. Durch die Hochdruckpumpe wird ausschließlich der für die Verteilung des Schmiermittels notwendige Schmierdruck aufgebaut, wodurch das Schmiermittel in die Führungsnut gepresst ist.

Das Reservoir kann über eine Einfüllleitung von außen mit dem Schmiermittel befüllt werden, so dass für eine bestimmte Anzahl von Zustellbewegungen der Keilstange bzw. Keilhakenkupplung bzw. der Spannbacke eine ausreichende Menge von Schmiermittel in dem Reservoir vorhanden ist. Folglich ist das Reservoir nach einer bestimmten Anzahl von Zustellbewegungen mittels eines Fettbalges, in dem das Schmiermittel eingefüllt ist, in das Reservoir eingepresst. Das Schmiermittel steht in dem Reservoir unter einem Druck von etwa ein bis zwei bar, so dass aus dem Reservoir permanent eine bestimmte Menge des Schmiermittels in Richtung des Raumes der Hochdruckpumpe gepresst ist, wodurch der Raum der Hochdruckpumpe mit dieser Menge des Schmiermittels gefüllt ist.

Da die Zustellbewegungen der Keilstangen bzw. der Weg den die Keilstangen zur Zustellung der Spannbacken zurückzulegen haben, abhängig ist von der Größe des einzuspannenden Werkstückes, ist es zweckmäßig, wenn die Betätigungsstange, die zwischen der Keilstange und der Druckblatte der Hochdruckpumpe vorgesehen ist, aus zwei Teilen besteht, die teleskopartig ineinander gelagert sind, denn dadurch kann die Keilstange in einem bestimmten Bewegungsbereich verfahren werden, ohne dass die Betätigungsstange beschädigt ist. Vielmehr kann die Betätigungsstange nach Erreichen einer Endposition, die durch die Stirnwand des Raumes, in dem die Hochdruckpumpe angeordnet ist, vorgegeben ist, zusammengefahren werden. Folglich ist die Bewegungsfreiheit der Keilstange und damit der Zustellweg der jeweiligen Spannbacke durch die vorhandene Anordnung der Hochdruckpumpe nicht begrenzt, sondern es sind nach wie vor die Werkstücke mit ihren entsprechenden Durchmessern einspannbar, die auch bislang auf den bekannten Spannfuttern gehalten sind.

In der Zeichnung ist ein erfindungsgemäßes Ausführungsbeispiel eines Spannfutters dargestellt, das nachfolgend näher erläutert ist. Im Einzelnen zeigt:
- Figur 1a: ein Spannfutter in dessen eine Stirnseite drei radial zulaufende Führungsnuten eingearbeitet sind, in die jeweils eine Spannbacke zur Halterung eines einzuspannenden Werkstückes eingesetzt sind und mit drei der jeweiligen Spannbacke zugeordneten Keilstange, die trieblich mit einem in der Längsrichtung des Spannfutters verlaufenden axial verschiebbaren Betätigungskolben stehen, in Vorderansicht,
- Figur 1b: das Spannfutter gemäß Figur 1a, in Seitenansicht, mit drei Einlassöffnungen zur Einfüllung eines Schmiermittels in das Spannfutter,
- Figur 2: das Spannfutter gemäß Figur 1a entlang der Schnittlinie II-II,
- Figur 3a: das Spannfutter gemäß Figur 1a entlang der Schnittlinie III-III in einer Ausgangsstellung,
- Figur 3b: das Spannfutter gemäß Figur 3a in einer Zwischenstellung,
- Figur 3c: das Spannfutter gemäß Figur 3a in einer Endstellung,
- Figur 4: das Spannfutter gemäß Figur 1a entlang der Schnittlinie IV-IV,
- Figur 5: das Spannfutter gemäß Figur 1b entlang der Schnittlinie V-V und
- Figur 6: das Spannfutter gemäß Figur 1a entlang der Schnittlinie VI-VI.

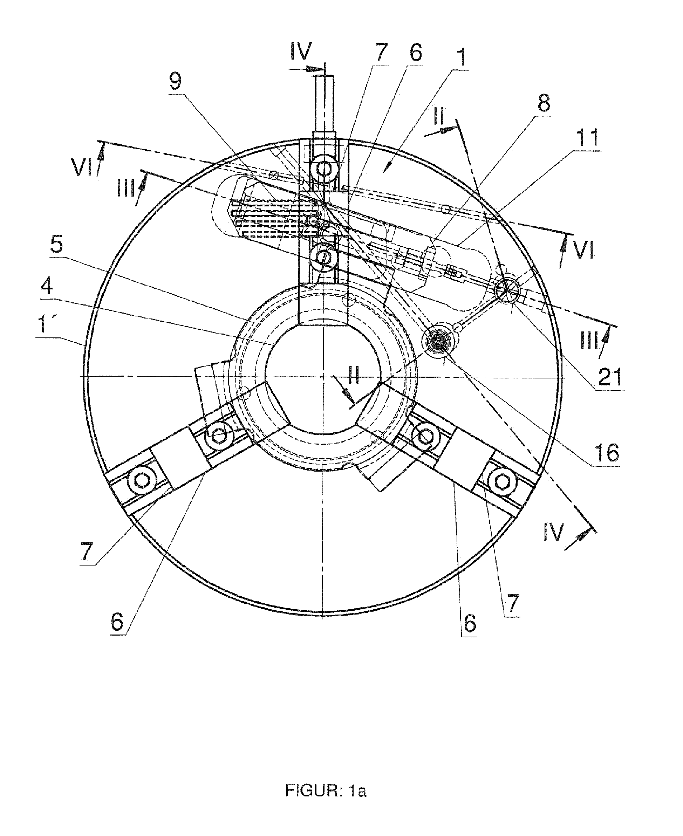

Das in Figur 1a abgebildete Spannfutter 1 besteht aus einem Futterkörper 1', dessen eine freie Stirnseite mit der Bezugsziffer 2 und dessen Längsachse mit der Bezugsziffer 3 gekennzeichnet ist. Die freie Stirnseite 2 weist dabei in Richtung eines nicht dargestellten einzuspannenden Werkstückes drei Spannbacken 7 auf, um dieses an dem Spannfutter 1 im Raum zentriert zu halten. Solche Spannfutter 1 werden insbesondere an Werkzeugmaschinen angebaut, um Wellen, Hohlzylinder und sonstige rotationssymmetrische Bauteile einzuspannen und zu bearbeiten.

Fluchtend zu der Längsachse 3 des Futterkörpers 1' ist eine Bohrung 4 in dieses eingearbeitet, in die ein Betätigungskolben 5 axial verschiebbar eingesetzt ist. Der Betätigungskolben 5 kann pneumatisch, hydraulisch oder elektrisch hin und her bewegt werden, um sowohl eine Zustellbewegung als auch eine entsprechend groß bemessene Spannkraft zur Halterung der Werkstücke zur Verfügung zu stellen.

Desweiteren sind in dem Futterkörper 1' drei Aufnahmetaschen 11 eingearbeitet, in die jeweils eine Keilstange 8 axial verschiebbar eingesetzt ist. Die Keilstange 8 steht über nicht dargestellte Zwischenglieder in trieblicher Wirkverbindung mit dem Betätigungskolben 5, so dass bei der axialen Bewegung des Betätigungskolbens 5 jede der drei Keilstangen 8 synchron hin und her bewegt ist.

In die freie Stirnseite 2 des Futterkörpers 1' sind drei radial in Richtung der Bohrung 4 verlaufende Führungsnuten 6 eingearbeitet, in die jeweils eine der Spannbacken 7 einsetzbar ist. Jede der Aufnahmetaschen 11 ist dabei einer der Führungsnuten 6 zugeordnet und die in die Aufnahmetaschen 11 eingeschobenen Keilstangen 8 ragen in die Führungsnuten 6 ein. Sobald eine der Spannbacken 7 in die Führungsnuten 6 von außen hineingeschoben ist, gelangt eine der Keilstange 8 zugewandte Schrägverzahnung 9, 10, die an der Unterseite der jeweiligen Spannbacke 7 angearbeitet ist, in formschlüssiger Wirkverbindung mit einer an der Keilstangen 8 angearbeiteten Schrägverzahnung 9. Sobald daher die jeweilige Keilstange 8 durch den Betätigungskolben 5 hin und her bewegt ist, wird über die beiden Schrägverzahnungen 9 und 10 die Spannbacken 7 eine radiale Zustellbewegung der Spannbacken 7 erzeugen, so dass diese in Richtung der Bohrung 4 verfahren sind und somit zwischen den drei Spannbacken 7 ein Werkstück zentrisch einspannbar ist.

Solche Spannfutter 1 haben sich in der Praxis für verschiedene Größen von zu bearbeitenden Werkstücken bewährt, da der Einstellbereich der drei Spannbacken 7 an unterschiedlich großen Durchmessern der Werkstücke einstellbar ist, und daher ein Spannbacken-Wechsel 7 ausschließlich dann zu erfolgen hat, wenn sich die Werkstückdimensionen erheblich verändern.

Gleichwohl werden durch die Bearbeitung der Werkstücke Verschmutzungspartikel in die Führungsnuten 6 eindringen. Solche Verschmutzungspartikel können beispielsweise durch Kühl- oder Schmierflüssigkeiten oder durch die metallischen Späne, die bei der Bearbeitung des Werkstückes abgetrennt sind, entstehen. Sobald sich jedoch solche Verschmutzungspartikel in den Führungsnuten 6 ablagern, gelangen diese bei der nachfolgenden Überführung der jeweiligen Spannbacke 7 zwischen diesen, so dass der Reibkoeffizient zwischen der Paarung Spannbacke 7 und Führungsnut 6 erheblich erhöht ist. Eine solche Reibungserhöhung führt dazu, dass die Betätigungskraft, die über die Spannbacken 7 auf das Werkstück zu übertragen sind, reduziert werden, denn die Reibungskräfte zwischen den Spannbacken 7 und der Führungsnut 6 stehen der Einspannkraft entgegen. Darüberhinaus wird die Zustellgenauigkeit bzw. die Präzision der Einspannung durch diese Verschmutzungspartikel verschlechtert, denn die synchrone Bewegung der Spannbacken 7 kann durch diese Verschmutzungspartikel gestört sein.

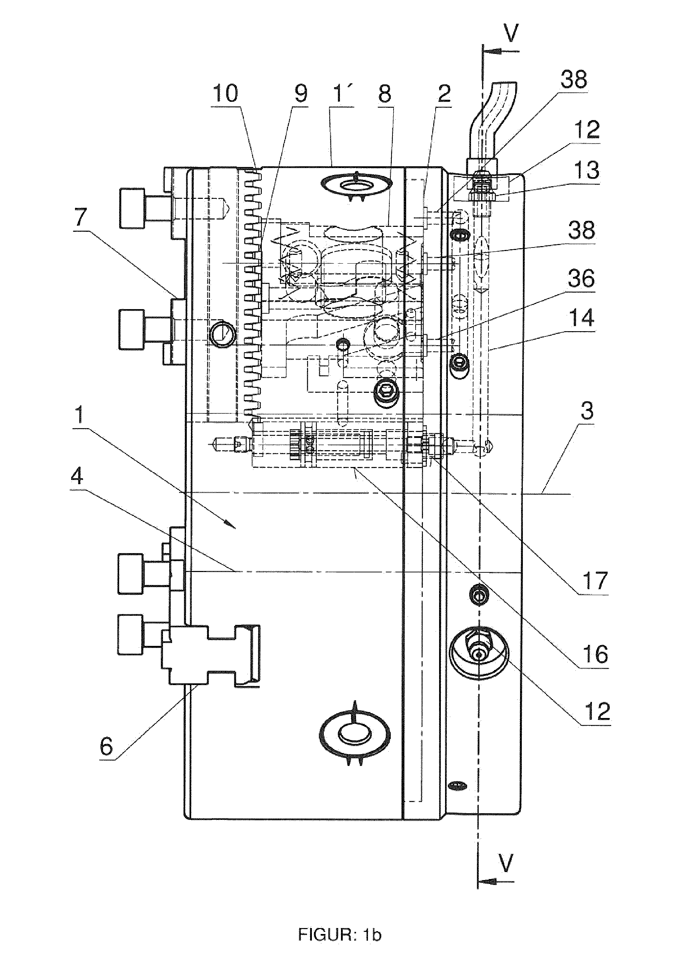

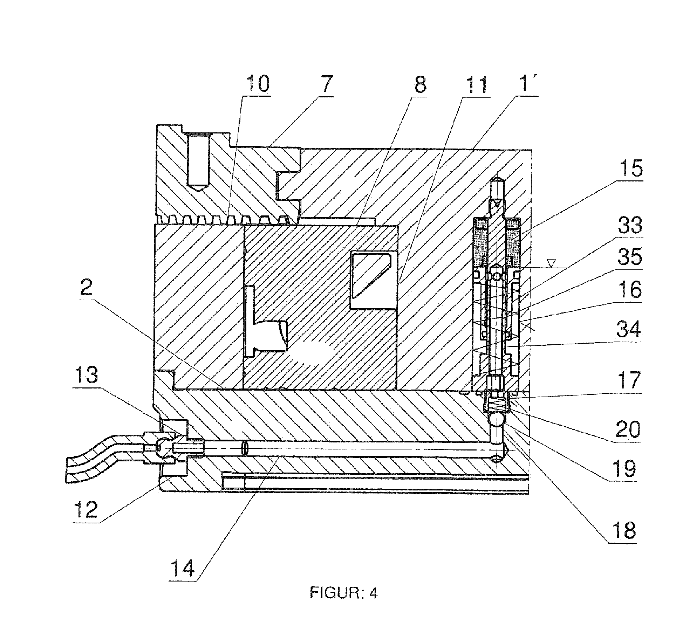

Durch das erfindungsgemäße Spannfutter 1 sollen diese Verschmutzungen zwischen der Spannbacke 7 und der Führungsnut 6 bei jeder Zustellbewegung der Keilstange 8 gesäubert werden, so dass der Reibkoeffizient zwischen der Führungsnut 6 und der Spannbacke 7 möglichst gering gehalten ist. Zu diesem Zweck sind zunächst in den Futterkörper 1' drei Einfüllöffnungen 12 gemäß Figur 1b eingearbeitet, die im Betriebszustand durch einen Stopfen 13 verschlossen sind. Die Stopfen 13 können von den Einfüllöffnungen 12 im Stillstand des Spannfutters 1 gelöst sein, um beispielsweise mittels eines Fettbalges, in dem ein Schmiermittel 39 eingefüllt ist, mit diesem befüllt zu werden. Durch den Einpressdruck des Fettbalges gelangt das Schmiermittel 39, wie dies insbesondere Figur 4 zu entnehmen ist, in ein in den Futterkörper 1' eingearbeitetes Reservoir 15. Die Einfüllöffnung 12 ist dabei über eine Zuführleitung 14 mit dem Reservoir 15 verbunden.

Zwischen dem Reservoir 15 und der Zuführleitung 14 ist ein Rückschlagventil 17 eingebaut, das aus einer Kugel 18, einem Ventilsitz 19 und einer Schraubendruckfeder 20 besteht. Durch den Einpressdruck des Schmiermittels 39 wird dabei die Kugel 18 aus dem Ventilsitz 19 gedrückt und das Schmiermittel 39 gelangt in das Reservoir 15. Sobald der Einpressdruck nicht mehr anliegt, wird die Kugel 18 durch die Schraubendruckfeder 20 in den Ventilsitz 19 gepresst, so dass das Reservoir 15 verschlossen ist.

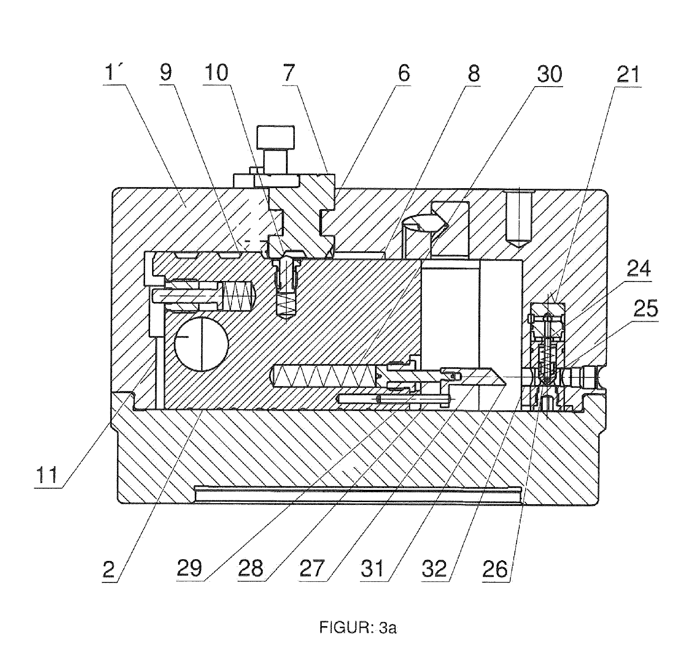

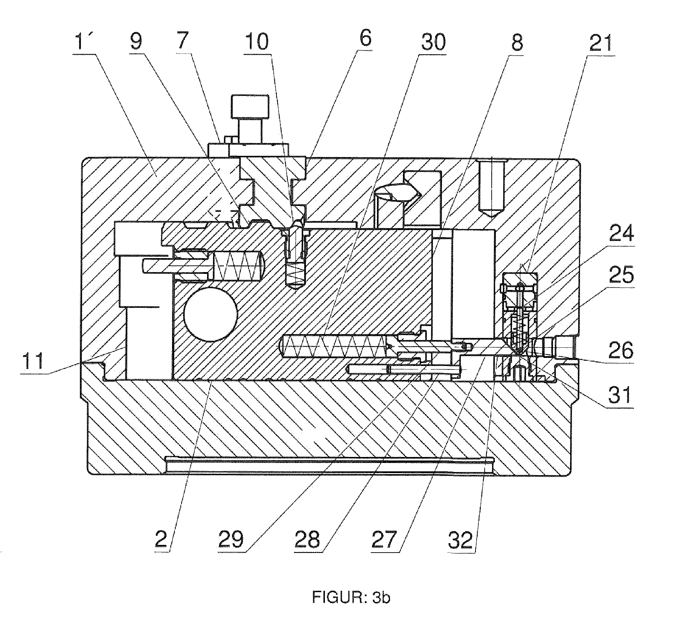

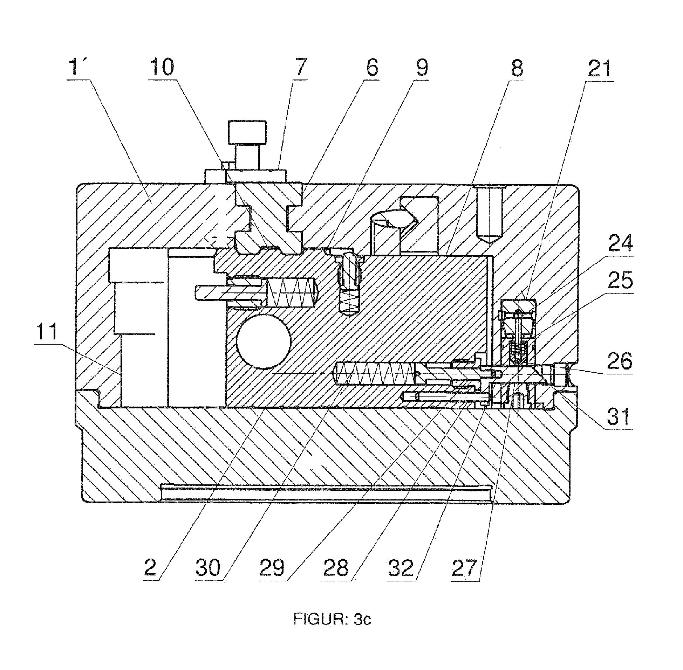

In dem Reservoir 15 ist eine Förderpumpe 16 vorgesehen, durch die eine bestimmte Menge des Schmiermittels 39 aus dem Reservoir 15 über eine Förderleitung 23 in einen Raum 22 eingepresst ist. In dem Raum 22 ist dabei eine Hochdruckpumpe 21 eingebaut, durch die das Schmiermittel 39 bei der Betätigung der Keilstange 8 über Schmierleitung 36 an eine Abzweigung 27 gemäß den Figuren 3a, 3b, 3c gelangt. An der Abzweigung 27 sind, wie dies noch nachfolgend näher erläutert ist, drei Verteilleitungen 28 vorgesehen, die jeweils an einer unterschiedlichen Position in der Führungsnut 6 einmünden, so dass durch die Hochdruckpumpe 21 das Schmiermittel 39 an drei verschiedenen Positionen in die Führungsnut 6 gepresst ist.

Die Förderpumpe 16 besteht aus einem Lagerstift 34, in den eine Sacklochbohrung als Reservoir 15 eingearbeitet ist. An dem Lagerstift 34 ist ein Kolben 33 axial verschiebbar angeordnet, der gegen die Kraft einer Schraubendruckfeder 35 in dem Reservoir 15 verstellbar ist. Der Kolben 33 und die Schraubendruckfeder 35 üben demnach einen konstanten Förderdruck auf das Schmiermittel 39 aus, der bei etwa ein bis zwei bar liegt, so dass das Schmiermittel 39 aus dem Reservoir 15 über die Förderleitung 23 in den Raum 22 der Hochdruckpumpe 21 gepresst ist. Das abgegebene Volumen des Schmiermittels 39 hängt dabei von der Dimensionierung des Reservoirs 15 ab, der von dem Kolben 33 in zwei Teilbereiche unterteilt ist, so dass der erste Teilbereich des Reservoirs 15 als Vorratskammer und der zweite Teilbereich des Reservoirs 15 als Abgabekammer anzusehen ist. Die Förderleitung 23 mündet dabei in den Teilbereich des Reservoirs 15, der als Abgabekammer fungiert.

In Figur 3a ist die triebliche Wirkverbindung zwischen der Keilstange 8 und der Hochdruckpumpe 21 zu entnehmen. Die Hochdruckpumpe 21 besteht aus einem Lagerstift 24, an dem axial verschiebbar eine Druckplatte 25 angebracht ist. In die Keilstange 8 ist ein Betätigungsstift 27 eingebaut, der aus einem ersten und zweiten Teilabschnitt 28 und 29 besteht, die über eine Schraubendruckfeder 30 an der Keilstange 8 abgestützt sind und im Bedarfsfalle teleskopartig ineinander gleiten.

Die Druckplatte 25 weist eine in Richtung des Betätigungsstiftes 27 ausgerichtete schiefe Ebene 26 auf, und die Spitze 31 des Betätigungsstiftes 27 ist gegenläufig zu der schiefen Ebene 26 der Druckplatte 25 ausgerichtet.

In Figur 3b ist ersichtlich, dass die Spitze 31 des Betätigungsstiftes 27 auf die schiefe Ebene 26 der Druckplatte 25 einwirkt, sobald die Keilstange 8 in Richtung des Raumes 22 zugestellt ist. Durch diese Bewegung der Keilstange 8 entsteht die radiale Zustellbewegung der jeweiligen Spannbacke 7. Bei der Fortsetzung dieser Zustellbewegung der Keilstange 8 wird zunächst die Schraubendruckfeder 30 zwischen der Keilstange 8 und dem Betätigungsstift 27 zusammengedrückt und gleichzeitig wird die Druckplatte 25 axial entlang des Lagerstiftes 24 bewegt, wodurch das in dem Raum 22 eingefüllte Schmiermittel 39 aus diesem in die Schmiermittelleitung 36 mit einem Druck von etwa 200 bar eingepresst ist.

Aus Figur 3c ist ersichtlich, dass die Zustellbewegung der Keilstange 8 durch die Anordnung der Hochdruckpumpe 21 in dem Raum 22 nicht behindert wird, denn der Betätigungsstift 27 kann seitlich versetzt zu der Druckplatte 25 weiterverfahren werden und die Spitze 31 des Betätigungsstiftes 27 wird in eine Aufnahmebohrung 32 eingeschoben. Auch durch die teleskopartige Ausbildung des Betätigungsstiftes 27 durch den ersten und zweiten Teilabschnitt 28 und 29 kann die Länge des Betätigungsstiftes 27 derart reduziert werden, dass die Bewegung der Keilstange 8 durch die Hochdruckpumpe 21 nicht behindert ist. Darüberhinaus vollzieht die Hochdruckpumpe 21 eine permanent gleichgroße Hubbewegung, so dass exakt die in dem Raum 22 eingefüllte Menge des Schmiermittels 39 aus diesem ausgepresst ist.

Sobald die Keilstange 8 in die Ausgangsstellung der Figur 3a zurücküberführt ist, wird die Druckplatte 25 in die Ausgangsposition zurückgefahren, denn die Druckplatte 25 wird über eine Schraubendruckfeder 30 mit einer entsprechenden Rückstellkraft betätigt. Durch die Förderpumpe 16 wird eine gleichgroß bemessene Menge des Schmiermittels 39 aus dem Reservoir 15 in den Raum 22 der Hochdruckpumpe 21 eingefüllt, so dass die Hochdruckpumpe 21 erneut eine ausreichende Menge von Schmiermittel 39 fördern kann.

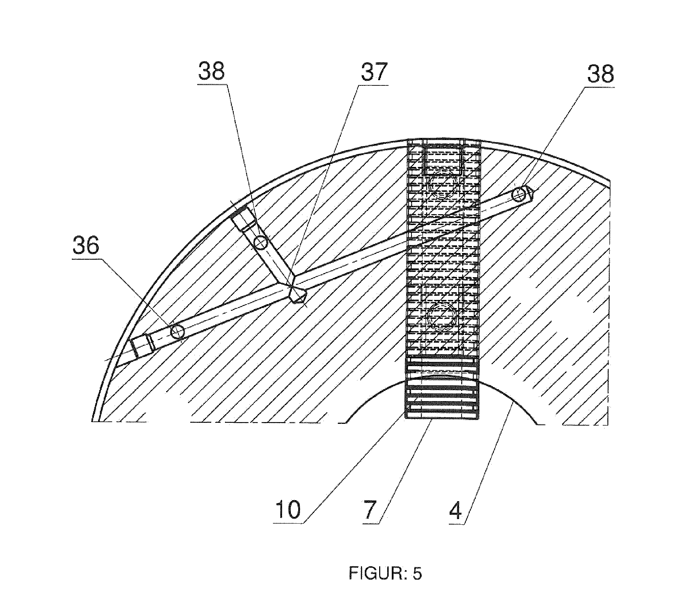

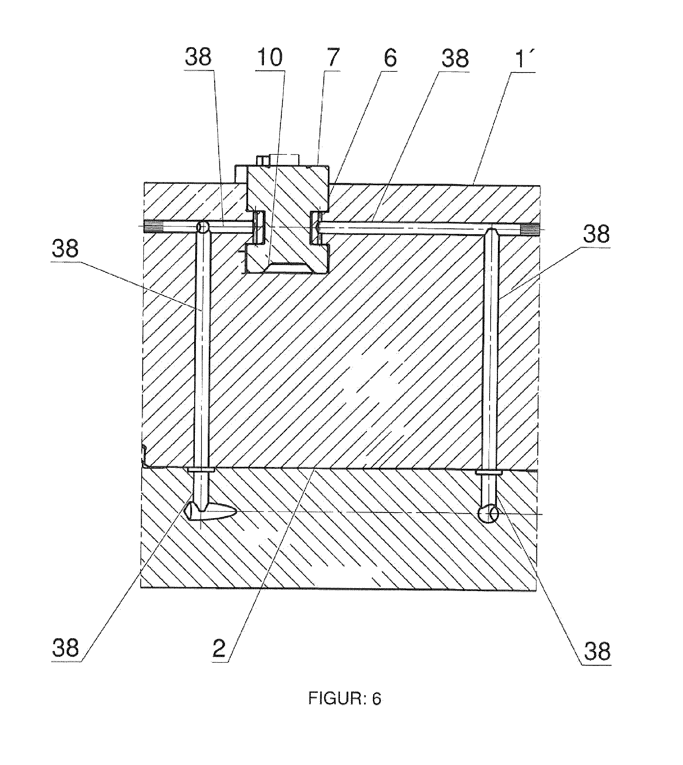

Aus den Figuren 5 und 6 ist zu entnehmen, wie das Schmiermittel aus dem Raum 22 in die Führungsnut 6 gelangt. Von der Abzweigung 37 gehen nämlich zwei Verteilleitungen 38 ab, in die das Schmiermittel 39 gelangt. Die Verteilleitungen 38 enden jeweils an einer unterschiedlichen Position in der Führungsnut 6.

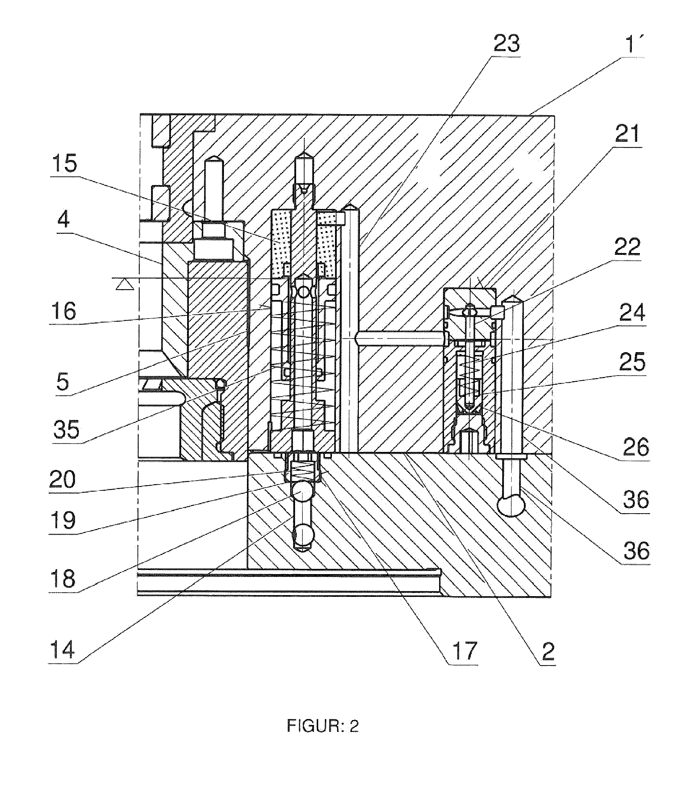

Dabei ist jeder Führungsnut 6 eine in den Figuren 1a bis 6 beschriebene Fördereinrichtung des Schmiermittels 39 zugeordnet.

Desweiteren ist es für den Fachmann ohne weiteres möglich, die beschriebene triebliche Wirkverbindung zwischen der Spannbacke 7 und der Keilstange 8 durch eine Keilhakenkupplung zu ersetzen, die in der Beschreibungseinleitung gewürdigt wurden und über die Zustellbewegung der Keilhakenkupplung die Hochdruckpumpe 21 zu aktivieren.

## Patentansprüche

1. Spannfutter (1), mit einem Futterkörper (1'), an dessen einer Stirnseite (2) mindestens zwei radial verlaufende Führungsnuten (6) eingearbeitet sind, mit jeweils einer in die Führungsnut (6) eingesetzten Spannbacke (7), mit jeweils einer der Spannbacke (7) zugeordneten und trieblich mit dieser über eine Schrägverzahnung (9, 10) verbundene Keilstange (8), die in dem Futterkörper (1') verschiebbar gelagert ist oder durch eine Keilhakenkupplung, und mit einem Betätigungskolben (15), der zentrisch in dem Futterkörper (1') angeordnet ist und der trieblich mit den Keilstangen (8) oder der Keilhakenkupplung in Wirkverbindung steht,
**dadurch gekennzeichnet,**
**dass** in einem in dem Futterkörper (1') vorgesehenen Raum (22) eine Hochdruckpumpe (21) angeordnet ist, dass in dem Raum (22) ein Schmiermittel (39) eingefüllt ist, dass aus dem Raum (22) der Hochdruckpumpe (21) eine Schmiermittelleitung (36) in den Futterkörper (1') vorhanden ist, die in eine Abzweigung (37) mündet, von der mindestens eine Schmierleitung (38) abzweigt bzw. abzweigen, die jeweils an einer unterschiedlichen Position in die Führungsnuten (6) mündet bzw. münden und dass die Hochdruckpumpe (21) durch die Zustellbewegung der jeweiligen Keilstange (8) oder der Keilhakenkupplung aktiviert ist.

2. Spannfutter nach Anspruch 1,
**dadurch gekennzeichnet,**
**dass** in den Futterkörper (1) eine Vielzahl von Leitungsabschnitten (12, 14, 23, 36, 37, 38) eingearbeitet sind, dass eine Zuführleitung (14) von der Außenseite des Futterkörpers (1') zu einem in dem Futterkörper (1') eingearbeiteten Reservoir (15) zur Aufnahme des Schmiermittels (39) verläuft, dass von dem Reservoir (15) eine Förderleitung (23) in den Futterkörper (1') eingearbeitet ist, die in dem Raum (22) der Hochdruckpumpe (21) mündet.

3. Spannfutter nach Anspruch 2,
**dadurch gekennzeichnet,**
**dass** in dem Reservoir (15) eine einen Förderdruck aufbauende Förderpumpe (16) vorgesehen ist.

4. Spannfutter nach einem der vorgenannten Ansprüche,
**dadurch gekennzeichnet,**
**dass** die Hochdruckpumpe (21) aus einer Druckplatte (25) besteht, die an einem Lagerstift (24) befestigt und in dem Raum (22) entlang des Lagerstiftes (24) verschiebbar gelagert ist, dass zwischen der Druckplatte (25) und einem ringförmigen Anschlag (40) aufweisenden Gehäusewand eine Schraubendruckfeder (20) vorgesehen ist und dass an die Druckplatte (25) eine in Richtung der Keilstange (8) weisende schiefe Ebene (26) angearbeitet ist, die durch einen an der Keilstange (8) oder Keilhakenkupplung befestigten Betätigungsstift (27) in Richtung des Anschlages (40) bewegt ist.

5. Spannfutter nach einem der vorgenannten Ansprüche,
**dadurch gekennzeichnet,**
**dass** die Förderpumpe (16) in das Reservoir (15) aus einem in dem Reservoir (15) axial verschiebbaren Hubkolben (33) besteht, der entgegen der Kraft einer Schraubendruckfeder (35) bewegbar ist, dass in den Hubkolben (33) das Reservoir (15) eingearbeitet ist, die im Bereich der Eintrittsöffnung der Einfüllbohrung mittels eines Rückschlagventiles (17) verschlossen ist und dass im Bereich des Endes der Einfüllbohrung (41) die Förderleitung (23) zwischen dem Reservoir (15) und dem Raum (22) der Hochdruckpumpe (21) einmündet.

## Geänderte Patentansprüche

### Geänderte Patentansprüche gemäss Regel 137(2) EPÜ.

1. Spannfutter (1), mit einem Futterkörper (1'), an dessen einer Stirnseite (2) mindestens zwei radial verlaufende Führungsnuten (6) eingearbeitet sind, mit jeweils einer in die Führungsnut (6) eingesetzten Spannbacke (7), mit jeweils einer der Spannbacke (7) zugeordneten und trieblich mit dieser über eine Schrägverzahnung (9, 10) verbundene Keilstange (8), die in dem Futterkörper (1') verschiebbar gelagert ist, oder durch eine Keilhakenkupplung, mit einem Betätigungskolben (15), der zentrisch in dem Futterkörper (1') angeordnet ist und der trieblich mit den Keilstangen (8) oder der Keilhakenkupplung in Wirkverbindung steht, mit einem in dem Futterkörper (1') vorgesehenen Raum (22), mit einem in dem Raum (22) eingefüllten Schmiermittel (39) und mit einer Schmiermittelleitung (36), die in dem Futterkörper (1') vorhanden ist , die in eine Abzweigung (37) mündet, von der mindestens eine Schmierleitung (38) abzweigt bzw. abzweigen, die jeweils an einer unterschiedlichen Position in die Führungsnuten (6) mündet bzw. münden,
**dadurch gekennzeichnet,**
**dass** in den Raum (22) eine Hochdruckpumpe (12) angeordnet ist, dass die Hochdruckpumpe (21) aus dem Raum (22) durch die Zustellbewegung der jeweiligen Keilstange (8) oder der Keilhakenkupplung aktiviert ist, dass in den
Futterkörper (1) eine Vielzahl von Leitungsabschnitten (12, 14, 23, 36, 37, 38) eingearbeitet sind, dass eine Zuführleitung (14) von der Außenseite des Futterkörpers (1') zu einem in dem Futterkörper (1') eingearbeiteten Reservoir (15) zur Aufnahme des Schmiermittels (39) verläuft, und dass von dem Reservoir (15) eine Förderleitung (23) in den Futterkörper (1') eingearbeitet ist, die in dem Raum (22) der Hochdruckpumpe (21) mündet.

2. Spannfutter nach Anspruch 1,
**dadurch gekennzeichnet,**
**dass** in dem Reservoir (15) eine einen Förderdruck aufbauende Förderpumpe (16) vorgesehen ist.

3. Spannfutter nach einem der vorgenannten Ansprüche,
**dadurch gekennzeichnet,**
**dass** die Hochdruckpumpe (21) aus einer Druckplatte (25) besteht, die an einem Lagerstift (24) befestigt und in dem Raum (22) entlang des Lagerstiftes (24) verschiebbar gelagert ist, dass zwischen der Druckplatte (25) und einem ringförmigen Anschlag (40) aufweisenden Gehäusewand eine Schraubendruckfeder (20) vorgesehen ist und dass an die Druckplatte (25) eine in Richtung der Keilstange (8) weisende schiefe Ebene (26) angearbeitet ist, die durch einen an der Keilstange (8) oder Keilhakenkupplung befestigten Betätigungsstift (27) in Richtung des Anschlages (40) bewegt ist.

4. Spannfutter nach einem der vorgenannten Ansprüche,
**dadurch gekennzeichnet,**
**dass** die Förderpumpe (16) in das Reservoir (15) aus einem in dem Reservoir (15) axial verschiebbaren Hubkolben (33) besteht, der entgegen der Kraft einer Schraubendruckfeder (35) bewegbar ist, dass in den Hubkolben (33) das Reservoir (15) eingearbeitet ist, die im Bereich der Eintrittsöffnung der Einfüllbohrung mittels eines Rückschlagventiles (17) verschlossen ist und dass im Bereich des Endes der Einfüllbohrung (41) die Förderleitung (23) zwischen dem Reservoir (15) und dem Raum (22) der Hochdruckpumpe (21) einmündet.
